# EUROPEAN PATENT SPECIFICATION

(11) **EP 0 511 818 B1**
(45) Date of publication and mention of the grant of the patent: **22.06.1994**
(21) Application number: 92303804.6
(22) Date of filing: 28.04.1992
(51) Int. Cl.: B29D 30/70, B29D 30/24

(54) **Apparatus for forming annular product**
Vorrichtung zum Formen ringförmiger Gegenstände
Dispositif de fabrication d'un article annulaire

(30) Priority: 30.04.1991 JP 99051/91
(43) Date of publication of application: 04.11.1992
(73) Proprietor: SUMITOMO RUBBER INDUSTRIES LIMITED, Chuo-ku Kobe-shi Hyogo 651 (JP)
(72) Inventor: Masuda, Kenichi, Shirakawa-shi, Fukushima (JP)
(74) Representative: Stewart, Charles Geoffrey

(56) References cited:
- EP-A- 0 431 854
- US-A- 3 207 648
- US-A- 3 873 398
- US-A- 3 929 546
- US-A- 5 066 354

## Description

The present invention relates to an apparatus for forming an annular product, in particular, an annular product for use in tyre building.

Generally, in the process of building a pneumatic radial tyre, an annular product is formed around a drum by assembly together such components as breakers, reinforcing belts and treads, and the annular product (generally called herein a "product" may be more correctly referred to as the "in-process or intermediate product") is then attached or integrated to a carcass which is prefabricated on another drum, to produce a green tyre.

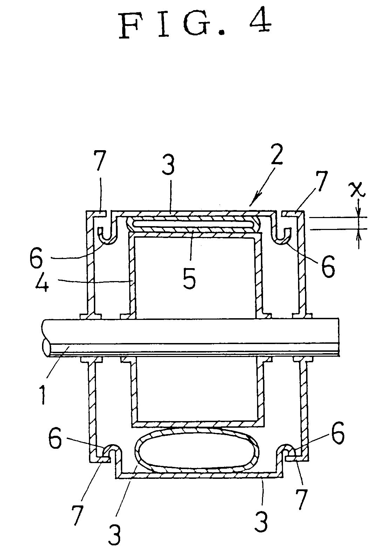

The conventional process and apparatus is shown in Fig.4 and comprises a drum shaft ¹ rotary drum ² which is divided, as viewed sectionally of the drum, into a plurality of drum segments 3 each having a sector shape. Every segment 3 is supported around the shaft 1 by a supporter 4 and is made radially retractable by means of an air bag 5. Also each segment 3 is provided with an engaging device 6 at each longitudinal end of the drum to engage with an angled edge of a control ring 7 when the bag 5 is inflated as shown in the lower half of Fig.4. Thus, the amount of inflation or radial expansion X can be controlled by the bag 5.Thus the conventional apparatus must have the control rings 7 in order to realise the required circumferential length in the expanded state (or the radial expansion X), but this length is much affected by the accuracy of the machining of the control rings 7 in their manufacture. In most cases large deviations or errors are found.

Further, when a change in the circumferential length is required, demounting and replacement of the control rings 7 is necessary and so, the preparation of a number of such rings is needed to comply with changes of length. As a result disadvantages are found in needing an uneconomical i.e. expensive stock of control rings 7 of different lengths and in a lengthy waiting time due to necessary ring exchange work.

The prior patent publication US-A-3873398 discloses a tyre ply band building apparatus comprising a main rotary shaft journaled on a fixed base, a ply band building drum consisting of a plurality of arcuate segments collectively defining the drum surface, a mechanism mounting the arcuate segments on the rotary shaft in such a manner as to enable them simultaneously to move radially thereby varying the diameter of the drum surface and drum diameter control means. However in this prior apparatus the drum diameter control means is located axially adjacent to the main rotary shaft and thereby adds to the overall axial length of the whole apparatus and increases the workspace required to utilise the apparatus in tyre production.

An object of the present invention is to offer apparatus for forming an annular product which allows setting of different circumferential lengths or desired radial lengths with ease and certainty.

According to the present invention an apparatus for forming an annular product comprises a drum shaft, a tapering structure the radius of which tapers axially, disposed upon and axially slidable on the drum shaft, a slide drive means for sliding axially the tapering structure, a drum disposed around an outer face of the tapering structure and which contracts radially in response to sliding movement of the tapering structure, and a position setting means comprising a stopper for limiting the axial position of the tapering structure to determine the amount of radial expansion and a screw mechanism for regulating the axial position of the stopper characterised by the screw mechanism being disposed axially within a centre core of the drum and a rotary drive means for rotating the screw mechanism.

By means of this mechanism the tapering structure is moved axially that is, longitudinally by the slide means so this one directional movement of the tapering structure increases or expands the drum diameter and oppositely the other directional and movement of the same decreases or retracts the drum diameter. During this movement the position setting means determines or sets the position for stopping the tapering structure so that, in the stopped position, the desired diametric length of the drum results.

Thus with the apparatus, first setting of a circumferential length of the drum, that is, setting of a drum diameter and changes thereof are feasible with ease and certainty. The slide drive means may comprise a hydraulic cylinder device.

The drum may preferably comprise of a plurality of drum segments divided and arranged circumferentially, a pair of support flanges secured to the drum shaft at axial or longitudinal two positions with a predetermined distance inbetween and provided with guide means which run radially on the inner opposite faces, and drum segment supporters, circumferentially divided in correspondence to the drum segments, each segment supporter having an inner recessed face formed to be generally complementary to the outer taper face of the tapering structure and being radially retractable with the aid of the guide means and being contactual with the outer face of the tapering structure with aid of a device which will be mentioned later.

A guide rail is preferable provided on the outer face of the tapering structure and a slider is provided on the inner face of the segment supporter, wherein the slider and the guide rail are engaged slideably.
The slide drive means may comprise of a post secured to the outer face of the drum shaft, a power cylinder body mounted slideably on the drum shaft and housing the piston inside, and a rod which is fixed to the cylinder body and connects the cylinder body to the tapering structure.

The stopper may be mounted inside the drum and be slidable along the drum shaft so that the stopper will contact or be away from the front end of the tapering structure. Further, the stopper may be connected to a rod which extends through the flange wall outside, and the extension end is connected to another flange located outside and this outside flange or adjusting flange is associated with the screw mechanism as will be apparent later.

The screw mechanism preferably comprises an adjusting rod, nut, and screw, shaft. The adjusting rod may have one end connected to a centre of the adjusting flange with axial movability and with relative rotatability so that adjusting rod is permitted to rotate, and this rod and the adjusting flange are permitted to move in unison axially. The adjusting rod may have the other end connected, by insertion, into a centre bored space of the main shaft with axial movability and with no relative rotatability. The nut is secured at a centre bore formed in the other end of the adjusting rod, and the screw shaft is engaged with the nut and is connected, by insertion, into a centre of the main shaft with rotatability, and the other end of the screw shaft is connected to the drive means which is formed of a motor.

Further aspects of the present invention will be apparent from the following description by means of description by way or example only, of embodiments of the invention in conjunction with the attached diagrammatic drawings in which:-

Fig.1. is a longitudinal sectional view of the drum and its vicinity of a embodiment of the present invention in the contracted state.

Fig.2. is a longitudinal sectional view of the base portion, which extend from the left hand side of Fig.1.

Fig.3. is a view of Fig.1 showing the expanded state of the drum.

Fig.4 is a sectional view to explain prior art.

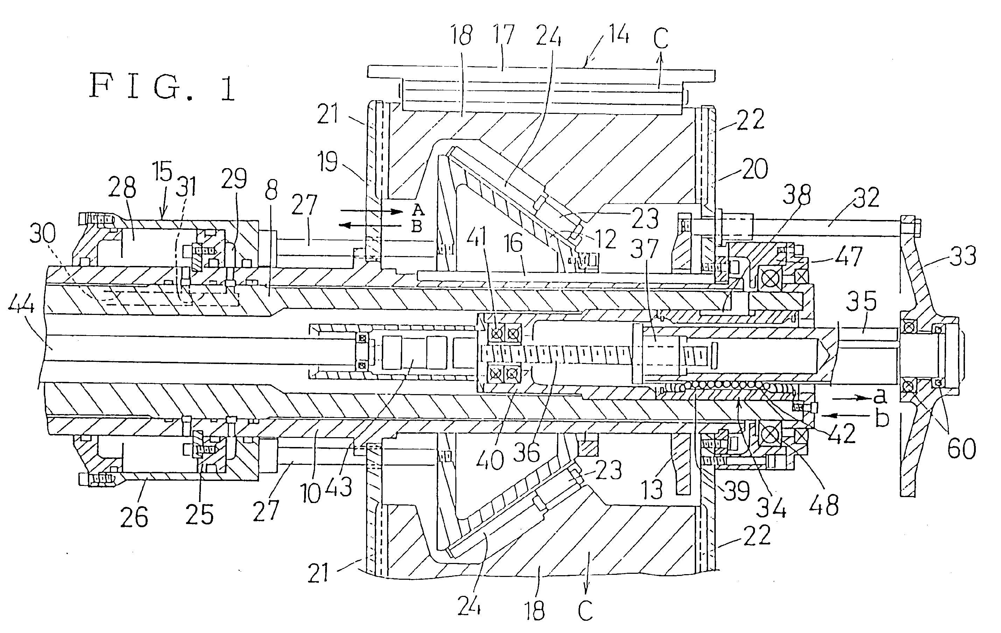

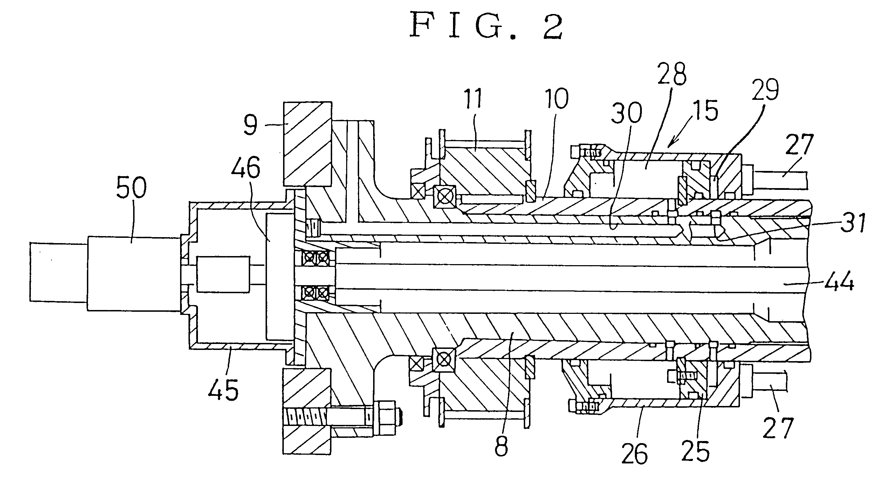

In Figs 1 and 2, a tubular main shaft 8 has one fixed end non rotatably mounted to a fixed main frame 9, and a drum shaft 10 is rotatably mounted around the main shaft 8. Mounted along the drum shaft 10 are a pulley 11 in the vicinity of the fixed end; a tapering structure 12, a stopper 13, a drum 14 at the other end portion and a power cylinder 15 forming a slide drive means at intermediate places.

The tapering structure 12 comprises an inner recessed frustum and is mounted over the drum shaft 10 longitudinally or axially slidable guided on a key 16, and housed in the drum 14. The drum 14 is circumferentially divided into a plurality of drum segments 17, each being a sector, and each segment 17 is supported from inside by a drum segment supporter 18.

It is to be noted that the drum 14 and the drum supporter 18 are, although not shown in the drawings, each circumferentially divided into a plurality of segments, and the manner of these arrangements is similar to Fig.2 of European Patent Application No. 0468718A2 (Publication date 29.01.92)

On the drum shaft 10, a pair of supporting flanges 19, 20 are erected fixed at two places spaced in the axial direction of the segments supporter 18, and guide means 21, 22 which run radially on each inner face of the flange 19,20 are provided. With the aid of the guide means 21, 22, each segment supporter 18 is carried so as to be radially retractable by the flanges 19, 20 therebetween.

On the inner face of each segment supporter 18, a slider 23 is mounted, and each slider 23 is arranged to slidably engage with a guide rail 24 formed on the outer face of the tapering structure 12, which arrangements enables radial retraction of the segment supporters 18 and thus, of the drum segments 17, in response to axial sliding movement of the tapering structure 12.

The power cylinder 15 for driving the tapering structure 12 to slide axially or longitudinally on the drum shaft 10 comprises a piston 25 fixed to the drum shaft 10, and a cylinder body 26 slidably mounted on the drum shaft 10 which enclose the piston 25. A rod 27 is fixed to the cylinder body 26. A plurality of said power cylinders 15 is arranged around the circumference and hydraulic fluid is supplied to each chamber 28, 29 of the cylinders 15 via oil passages 30 and 31 formed in the main shaft 8 and drum shaft 10. The rods 28 extend through holes which are provided through the flange wall 19.

A stopper 13 is provided comprising a position setting means for controlling where the tapering structure 12 is stopped. The stopper 13, positioned inside the drum 14 comprise a ring mounted around the drum shaft 10, it is placed between the front end of the tapering structure 12 and the supporting flange 20, and is connected to the flange 33, located outside, by a plurality of rods 32 arranged circumferentially. The flange 33 is rotatably supported at its centre by a bearing 60 mounted at the front end of an adjusting rod 35 included in a ball screw mechanism 34.

The ball screw mechanism 34 is designed to regulate the axial position of the stopper 13 by means of a drive means 50 (see Fig.2), arranged inside the main shaft 8. This mechanism 34 comprises a screw rod 36 and a ball nut 37 which engages with the screw rod 36 so that the screw rod 36 is borne by a first second retainer cylinder 39 & 40 secured inside the main shaft 8 together with the aid of the bearing 41 so as to allow only rotation. The nut 37 is secured to the adjusting rod 35 and the adjusting rod 35 is mounted in the first retainer cylinder 39 and carried by balls 42 to allow movement axially. The screw shaft 36 is connected to a motor 50, by rotary drive means which are a coupling 43 and a drive shaft 44. The motor 50 is mounted on the base 45 and connected to one end of the main shaft 8. At the same end of the shaft 8, an electromagnetic brake 46 is mounted for controlling the shaft 44.

A bearing case 47 is secured to the supporting flange 20, and in the bearing case 47, a bearing device 48 for the shaft 8 is located.

In the operation the apparatus firstly the necessary circumferential length around the drum 14 is calculated and pre-stored in desk-top computer and in response to inputs of data which stand for the circumference lengths, control data is prepared for the motor 50 so that the motor 50 operates as desired to slide the tapering structure 12 until the stopper 13 operates.

In practice the electromagnetic brake 46 is switched off and the motor 50 is operated so the screw shaft 36 rotates the calculated amount so that the adjusting rod 35 is moved in the direction indicated by arrow a or b in Fig.1. with aid of the ball nut 37. The flange 33 moves in unison with the adjusting rod 35 in the arrow a or b direction and thus the stopper 13 moves in the a or b arrow direction. Then, when the motor 50 stops, the electromagnetic brake 46 is used to stop the drive shaft 44 and the stopper 13 determines the place wherein the stopper position is held with certainty for the merit of the ball screw mechanism 34.

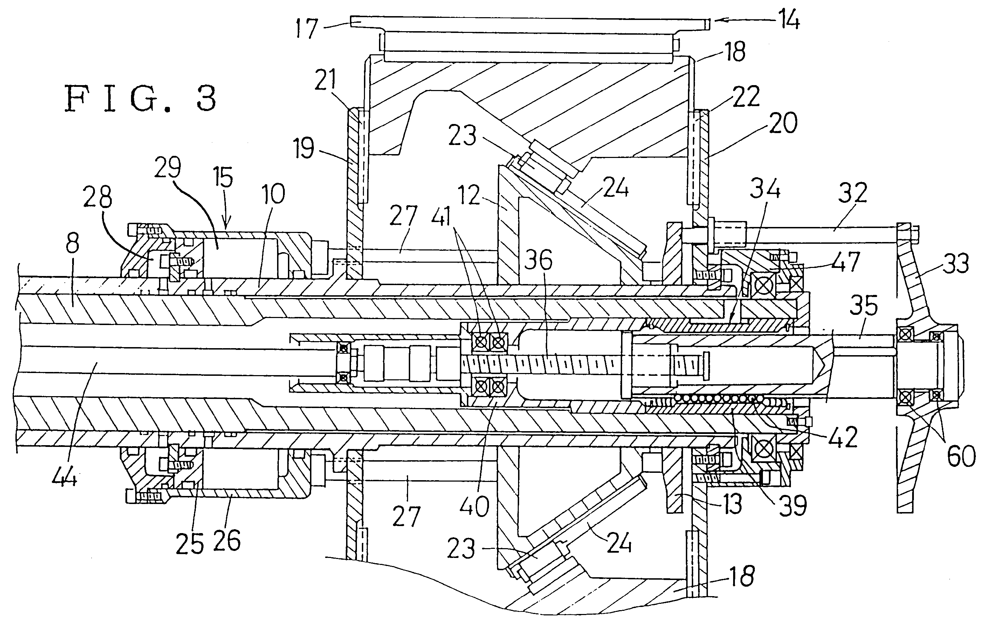

Then, when hydraulic fluid is supplied to the chambers 29 the cylinder body starts moving in the direction of arrow A and in turn, pushes the tapering structure 12 in arrow A direction. By the action of the guide rails 24 and the slide is 23, each segment supporter 18 and thus each drum segment 17 is moved radially outwardly. The expansion starts in the direction of arrow C and as assembled an enlarged drum 14 is formed. Then, as shown in Figure 3, when the tapering structure 12 abuts the stopper 13 and stops, the drum 14 is provided with the required circumferential length. Thereby the operation is finished for actualisation of the intended length.

As is seen the conventional control rings 7 for limiting the drum diameters are dispensed with and therefore uneconomical stock to allow for different circumferential lengths is saved. Also as compared with physical changing of control rings 7, settings of different circumferential lengths and changes thereof are greatly facilitated and higher working efficiency is attained. Further as the motor 50 and the ball screw mechanism 34 allow setting of circumferential lengths different lengths of annular products are permitted without stepwise limitations. When a computer is included to set the lengths, lengths which were once set in the past by dimension can be called out by only indicating the product codes. The use of the ball screw mechanism 34 enables long lasting retention of high accuracy after the setting so that a difference or error between the set length and the product real length can be reduced to as small as 1mm. Also high reliability is attained.

Turning back to the operation, when the cylinder body 26 of the cylinder device 15 is slid in the direction of arrow B the tapering structure 12 is in unison therebetween so that the slider 23 slides on the guide rail 24 and thus, the segments 17 and in turn, the drum 14 tend to retraction.

In the case of the green tyre building operation, the drum 14 is rotated to attach the breakers, reinforcing belts, and treads over the drum circumferential face. The rotation of the drum causes the concurrent rotation of stopper 13 and the flange 33 about the adjusting rod 35, but no affection comes into the ball screw mechanism 34 housed in the main shaft 8.

## Claims

1. An apparatus for forming an annular product comprising a drum shaft (10), a tapering structure (12) the radius of which tapers axially, disposed upon and axially slidable on the drum shaft (10), a slide drive means (15) for sliding axially the tapering structure (12), a drum (14) disposed around an outer face of the tapering structure (12) and which contracts radially in response to sliding movement of the tapering structure (12), and a position setting means (13,34,50) comprising a stopper (13) for limiting the axial position of the tapering structure (12) to determine the amount of radial expansion and a screw mechanism (34) for regulating the axial position of the stopper (13) characterised by the screw mechanism (34) being disposed axially within a centre core of the drum (10) and a rotary drive means (50) for rotating the screw mechanism (34).

2. An apparatus according to claim 1, characterised in that the drum shaft (10) is formed as a tube around a fixed main shaft (8) so as to be concentrically and rotatable relative thereto.

3. An apparatus according to claim 1 or 2 characterised in that the slide drive means (15) comprises a power cylinder unit.

4. An apparatus according to claims 1, 2 or 3 characterised in that the drum (14) comprises a pair of supporting flanges (19,20) secured to the drum shaft (10) at two axial positions with a predetermined distance therebetween and provided with guide means (21,22) which run radially on the inner opposite faces, a drum segment supporter (18) having radial movability with the aid of the guide means (21,22) and having an inner face engaged with an outer face of the tapering structure (12) to provide radial retraction and a drum segment (17) supported by an outer face of the segment supporter (18).

5. An apparatus according to claim 4 characterised in that a guide rail (24) is provided on the outer face of the tapering structure (12) and a slide (23) is provided on the inner face of the segment supporter (18), the slider (23) and the guide rail (24) being slidably engaged.

6. An apparatus according to claim 5 characterised in that the slide drive means (15) comprises a piston (25) secured to the outer face of the drum shaft (10), a power cylinder body (26) mounted slidable on the drum shaft (10) and housing the piston (25), and a rod (27) fixed to the cylinder body (26) and connects the cylinder body (26) to the tapering structure (12).

7. An apparatus according to claim 6, characterised in that the stopper (13) is mounted inside the drum (14) and slidable along the drum shaft (10) such that the stopper (13) contacts or becomes away from an end face of the tapering structure (12), the stopper (13) is provided with a rod (32) which extends through the flange wall (20) outside, the extension end of the rod (32) is connected to another flange (33) outside, the flange (33) outside is connected to a screw mechanism (34) the screw mechanism (34) comprises an adjusting rod (35) connected to a centre of the flange (33) outside with axial movability and with relative rotatability and also connected, by insertion, into a centre sleeve space of the main shaft (8) with axial movability and with no relative rotatability, a nut (37) secured to a centre of the adjusting rod (35), and a screw shaft (36) engaged with the nut (37) and connected, by insertion, into a centre of the main shaft (8) with rotatability; the screw shaft (36) is connected to the drive means which is formed of a motor (50).

## Patentansprüche

1. Vorrichtung zum Formen eines ringförmigen Produktes, die umfaßt eine Trommelwelle (10), eine Verjüngungsstruktur (12), deren Radius sich axial verjüngt, die auf der Trommelwelle (10) axial vergleitbar angebracht ist, ein Gleitantriebsmittel (15) zum axial gleitenden Verschieben der Verjüngungsstruktur (12), eine um eine äußere Fläche der Verjüngungsstruktur (12) angeordnete Trommel (14), die sich in Antwort auf eine Gleitbewegung der Verjüngungsstruktur (12) radial zusammenzieht, und ein Lageeinstellmittel (13, 34, 50), das umfaßt einen Anschlag (13) zur Begrenzung der axialen Lage der Verjüngungsstruktur (12), um den Betrag der radialen Expansion festzulegen, und einen Schraubmechanismus (34) zur Regulierung der axialen Lage des Anschlages (13), dadurch gekennzeichnet, daß der Schraubmechanismus (34) axial innerhalb eines zentralen Kernes der Trommel (10) angeordnet ist, und ein Rotationsantriebsmittel (50) zum Rotieren des Schraubmechanismus' (34) vorhanden ist.

2. Vorrichtung nach Anspruch 1, dadurch gekennzeichnet, daß die Trommelwelle (10) als Rohr um eine feststehende Hauptwelle (8) ausgebildet ist, so daß sie relativ zu dieser konzentrisch und rotierbar ist.

3. Vorrichtung nach Anspruch 1 oder 2, dadurch gekennzeichnet, daß das Gleitantriebsmittel (15) eine Leistungszylindereinheit umfaßt.

4. Vorrichtung nach den Ansprüchen 1, 2 oder 3, dadurch gekennzeichnet, daß die Trommel (14) umfaßt ein Paar Trägerflansche (19, 20), die an zwei axialen Lagen mit einem vorbestimmten dazwischenliegenden Abstand an der Trommelwelle (10) befestigt sind und mit Führungsmitteln (21, 22) versehen sind, die auf den inneren, gegenüberliegenden Flächen radial verlaufen, einen Trommelsegmentträger (18), der mit der Hilfe der Führungsmittel (21, 22) eine radiale Beweglichkeit aufweist und eine innere Fläche besitzt, die mit einer äußeren Fläche der Verjüngungsstruktur (12) in Eingriff steht, um ein radiales Zurückziehen vorzusehen, und ein Trommelsegment (17), das von einer äußeren Fläche des Segmentträgers (18) getragen ist.

5. Vorrichtung nach Anspruch 4, dadurch gekennzeichnet, daß eine Führungsschiene (24) auf der äußeren Fläche der Verjüngungsstruktur (12) vorgesehen ist, und daß ein Schlitten (23) auf der inneren Fläche des Segmentträgers (18) vorgesehen ist, wobei der Schlitten (23) und die Führungsschiene (24) im Gleiteingriff stehen.

6. Vorrichtung nach Anspruch 5, dadurch gekennzeichnet, daß die Gleitantriebsmittel (15) umfassen einen Kolben (25), der an der äußeren Fläche der Trommelwelle (10) befestigt ist, einen Leistungszylinderkörper (26), der vergleitbar auf der Trommelwelle (10) angebracht ist und den Kolben (25) aufnimmt, und einen Stab (27), der an dem Zylinderkörper (26) befestigt ist und den Zylinderkörper (26) mit der Verjüngungsstruktur (12) verbindet.

7. Vorrichtung nach Anspruch 6, dadurch gekennzeichnet, daß der Anschlag (13) innerhalb der Trommel (14) angebracht ist und derart entlang der Trommelwelle (10) vergleitbar ist, daß der Anschlag (13) eine Endfläche der Verjüngungsstruktur (12) kontaktiert oder von ihr weg gelangt, wobei der Anschlag (13) mit einem Stab (32) versehen ist, der sich durch die Außenseite der Flanschwand (20) erstreckt, wobei das Erstreckungsende des Stabes (32) mit einer Außenseite eines anderen Flansches (33) verbunden ist, wobei die Außenseite (33) des Flansches mit einem Schraubmechanismus (34) verbunden ist, wobei der Schraubmechanismus (34) umfaßt einen Einstellstab (35), der mit einer Mitte der Außenseite des Flansches (33) mit axialer Beweglichkeit und mit relativer Rotierbarkeit verbunden ist und weiterhin durch Einsetzen in einen zentralen Buchsenraum der Hauptwelle (8) mit axialer Beweglichkeit und ohne relative Rotierbarkeit verbunden ist, eine Schraubenmutter (37), die an einer Mitte des Einstellstabes (35) befestigt ist, und eine Schraubenwelle (36), die mit der Schraubenmutter (37) in Eingriff steht und die durch Einsetzen in eine Mitte der Hauptwelle (8) mit Rotierbarkeit verbunden ist; wobei die Schraubenwelle (36) mit dem Antriebsmittel, das von einem Motor (50) gebildet wird, verbunden ist.

## Revendications

1. Appareil destiné à la formation d'un produit annulaire, comprenant un arbre (10) de tambour, une structure (12) à dimension variant progressivement dont le rayon varie progressivement en direction axiale, disposée sur l'arbre (10) du tambour et pouvant coulisser axialement sur celui-ci, un dispositif (15) d'entraînement par coulissement destiné à faire coulisser axialement la structure (12) de dimension variant progressivement, un tambour (14) placé autour d'une face externe de la structure (12) à dimension variant progressivement et qui se contracte radialement lors du mouvement de coulissement de la structure (12) à dimension variant progressivement, et un dispositif (13, 34, 50) de réglage de position qui comporte un organe d'arrêt (13) destiné à limiter la position axiale de la structure (12) de dimension variant progressivement pour la détermination de l'amplitude d'expansion radiale, et un mécanisme à vis (34) destiné à régler la position axiale de l'organe d'arrêt (13), caractérisé en ce que le mécanisme à vis (34) est disposé axialement dans une âme centrale du tambour (10), et un dispositif (50) d'entraînement en rotation est destiné à faire tourner le mécanisme à vis (34).

2. Appareil selon la revendication 1, caractérisé en ce que l'arbre (10) du tambour est sous forme d'un tube disposé autour d'un arbre principal fixe (8) afin qu'il soit placé concentriquement à celui-ci et puisse tourner par rapport à lui.

3. Appareil selon la revendication 1 ou 2, caractérisé en ce que le dispositif (15) d'entraînement par coulissement comporte un vérin moteur.

4. Appareil selon la revendication 1, 2 ou 3, caractérisé en ce que le tambour (14) comporte une paire de flasques de support (19, 20) fixés à l'arbre (10) du tambour à deux positions axiales, avec une distance prédéterminée entre eux, et comporte des dispositifs de guidage (21, 22) qui sont disposés radialement sur les faces internes opposées, un organe (18) de support de segment de tambour ayant une mobilité radiale grâce aux dispositifs de guidage (21, 22) et ayant une face interne qui coopère avec une face externe de la structure (12) de dimension variant progressivement afin qu'un recul radial soit assuré, et un segment (17) de tambour supporté par une face externe de l'organe (18) de support de segment.

5. Appareil selon la revendication 4, caractérisé en ce qu'un rail de guidage (24) est placé à la face externe de la structure (12) de dimension variant progressivement, et un coulisseau (23) est placé à la face interne de l'organe (18) de support de segment, le coulisseau (23) et le rail de guidage (24) coopérant par coulissement.

6. Appareil selon la revendication 5, caractérisé en ce que le dispositif (15) d'entraînement par coulissement comporte un piston (25) fixé à la face externe de l'arbre (10) du tambour, un corps (26) de vérin moteur monté afin qu'il coulisse sur l'arbre (10) du tambour et logeant le piston (25), et une tige (27) fixée au corps (26) du vérin et qui raccorde le corps (26) du vérin à la structure (12) de dimension variant progressivement.

7. Appareil selon la revendication 6, caractérisé en ce que l'organe d'arrêt (13) est monté à l'intérieur du tambour (14) et peut coulisser le long de l'arbre (10) du tambour de manière que l'organe d'arrêt (13) soit au contact d'une face d'extrémité de la structure (12) de dimension variant progressivement ou s'écarte de cette face, l'organe d'arrêt (13) comporte une tige (32) traversant la paroi (20) du flasque vers l'extérieur, l'extrémité de prolongement de la tige (32) est raccordée à un autre flasque (33) placé à l'extérieur, le flasque (33) placé à l'extérieur est raccordé à un mécanisme à vis (34), le mécanisme à vis (34) comporte une tige d'ajustement (35) raccordée au centre du flasque (33) à l'extérieur avec des possibilités de mobilité axiale et avec des possibilités de rotation relative et étant aussi raccordée, par introduction, dans l'espace d'un manchon central de l'arbre principal (8) avec des possibilités de déplacement axial sans possibilité de déplacement relatif en rotation, un écrou (37) fixé au centre de la tige d'ajustement (35), et un arbre fileté (36) coopérant avec l'écrou (37) et raccordé, par introduction, au centre de l'arbre principal (8) avec des possibilités de rotation, et l'arbre fileté (36) est raccordé au dispositif d'entraînement qui est formé d'un moteur (50).
